(19) Europäisches Patentamt
European Patent Office
Office européen des brevets

(11) **EP 3 182 333 B1**

(12) **FASCICULE DE BREVET EUROPEEN**

(45) Date de publication et mention de la délivrance du brevet:
**05.09.2018 Bulletin 2018/36**

(51) Int Cl.:
***G06K 9/52*** *(2006.01)*          ***G06K 9/00*** *(2006.01)*
***G06T 17/20*** *(2006.01)*        *G01B 11/24* *(2006.01)*

(21) Numéro de dépôt: **16204808.6**

(22) Date de dépôt: **16.12.2016**

(54) **PROCÉDÉ DE DETECTION DE FRAUDE POUR AUTHENTIFIER UN DOIGT**

VERFAHREN ZUR ENTDECKUNG VON BETRUG FÜR DAS AUTHENTIFIZIEREN EINES FINGERS

FRAUD DETECTION METHOD FOR AUTHENTICATING A FINGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562737**

(43) Date de publication de la demande:
**21.06.2017 Bulletin 2017/25**

(73) Titulaire: **Idemia Identity & Security France**
**92130 Issy-les-Moulineaux (FR)**

(72) Inventeurs:
• **BOULANGER, Jean-François**
**92130 Issy les Moulineaux (FR)**
• **MORICEAU, Damien**
**92130 Issy les Moulineaux (FR)**

(74) Mandataire: **Regimbeau**
**20, rue de Chazelles**
**75847 Paris Cedex 17 (FR)**

(56) Documents cités:
**US-A1- 2014 049 373**

• **WOODARD D L ET AL: "Finger surface as a biometric identifier", COMPUTER VISION AND IMAGE UNDERSTANDING, ACADEMIC PRESS, US, vol. 100, no. 3, 1 décembre 2005 (2005-12-01), pages 357-384, XP027195839, ISSN: 1077-3142 [extrait le 2005-11-09]**
• **Shujun Huang ET AL: "3D fingerprint imaging system based on full-field fringe projection profilometry", Optics and Lasers in Engineering, vol. 52, 1 janvier 2014 (2014-01-01), pages 123-130, XP055297421, AMSTERDAM, NL ISSN: 0143-8166, DOI: 10.1016/j.optlaseng.2013.07.001**

**Description**

La présente invention se rapporte à un procédé de détection de fraude pour authentifier qu'un objet est un doigt humain. L'authentification par empreintes digitales ou par le réseau veineux est une des techniques utilisées pour l'authentification biométrique. Une image d'un doigt illuminé est acquise et analysée pour identifier un individu. La méthode la plus employée consiste à acquérir l'image du doigt lorsque celui-ci est apposé sur une surface, et à exploiter les interactions optiques entre le doigt et cette surface. C'est notamment le cas de la méthode dite de réflexion totale interne, plus connue sous l'acronyme de TIR pour l'anglais "Total Internai Reflection", dans laquelle on exploite les différences d'indices de réfraction entre l'air et la peau humaine pour mettre en évidence les crêtes et les sillons des empreintes digitales.

Néanmoins, la nécessité d'un contact entre le doigt et la surface pose plusieurs problèmes. En effet, le doigt doit être immobile lors de l'acquisition de l'image à traiter et le procédé se révèle lent, inadapté pour une utilisation massive dans des endroits de forte affluence, tel que des contrôles d'aéroports, où la rapidité du contrôle est importante. De plus, la qualité de l'image ainsi acquise dépend de l'état de la peau du doigt, qui peut être plus ou moins sèche, et de l'état de la surface, dont les contacts répétés avec des doigts peuvent encrasser celle-ci et nécessite donc un nettoyage périodique.

En outre, la surface entrant en contact la peau de différentes personnes, des problèmes d'hygiènes peuvent se poser, exacerbés par le fait que ce sont les doigts de ces personnes qui entrent en contact avec la surface. Il peut alors être nécessaire de prévoir du matériel de nettoyage et/ou de désinfection des mains des personnes après le contact avec la surface.

Il a donc été développé des dispositifs d'acquisition d'images d'empreintes d'au moins une partie d'une main d'un utilisateur capable de fonctionner sans contact. Parmi les méthodes développées, l'acquisition en trois dimensions (3D), dans laquelle on obtient un modèle 3D du doigt, est particulièrement intéressante. Par exemple, la demande de brevet WO 2009/112717 décrit un procédé dans lequel une mire lumineuse en trois couleurs est projetée sur la surface du doigt, et des images monochromes acquises dans chacune des couleurs projetées par une caméra permet de reconstituer un modèle en trois dimensions du doigt. La demande de brevet US2014/0049373 décrit un procédé de détection de fraude utilisant la forme du doigt. Comme tout procédé d'acquisition d'empreintes digitales, il est possible d'utiliser des leurres, de faux éléments du corps humain reproduisant les caractéristiques sur la base desquelles se fondent l'analyse de l'image, comme par exemple des empreintes digitales ou le réseau veineux du doigt. Il est donc nécessaire de prévoir en sus un procédé de validation pour valider de ce que l'objet analysé est bien un élément du corps humain, le plus souvent un doigt, mais il peut s'agir de la main dans son ensemble, ou d'une autre partie du corps.

Plusieurs méthodes ont été mises au point pour valider ou non qu'un objet est un élément du corps humain, faisant en général appel à diverses propriétés d'un doigt vivant plus ou moins difficiles à reproduire. Parmi ces solutions, certaines visent à mettre en évidence l'apparition et la disparition des réseaux veineux en fonction de la pression exercée par le doigt. Ces méthodes ne peuvent cependant pas être mises en oeuvre sur un capteur sans contact.

PRESENTATION DE L'INVENTION

L'invention a pour but de remédier au moins en partie à ces inconvénients et préférentiellement à tous, et vise notamment à proposer un procédé de détection de fraude permettant de déterminer qu'un objet est un doigt humain sans contact dudit objet, uniquement en analysant la forme de sa représentation tridimensionnelle.

A cet effet, il est proposé un procédé de détection de fraude pour authentifier qu'un objet est un doigt humain à partir d'une représentation tridimensionnelle dudit objet préalablement déterminée par une unité de traitement à partir d'une image dudit objet acquise par un dispositif d'acquisition d'image, ladite représentation tridimensionnelle comprenant un ensemble de points de représentation modélisant au moins une partie de la surface de l'objet, dans lequel un processeur met en oeuvre les étapes suivantes:

a) détermination d'au moins un plan principal comprenant un axe principal dans la direction longitudinale de la représentation tridimensionnelle de l'objet, ledit plan principal coupant la représentation de la surface de l'objet le long d'au moins une zone de coupure,
b) pour chaque plan principal, détermination d'un ensemble de points de travail à partir de points de représentation au niveau de la zone de coupure,
c) validation de ce que l'objet est un doigt humain par mise en oeuvre d'un traitement de validation sur la position des points de travail.

Le procédé est avantageusement complété par les caractéristiques suivantes, prises seules ou en quelconque de leurs combinaisons techniquement possibles:

- à l'étape a), l'axe principal de la représentation tridimensionnelle est déterminé par analyse en composantes principales de la répartition des points de représentation;
- à l'étape b), les points de travail correspondent aux projections sur le plan principal des points de représentation dont la distance par rapport au plan principal est inférieure à une distance donnée ou les points de travail correspondent aux intersections du plan principal avec des droites reliant deux points de représentation voisins sur la représentation de la surface;
- à l'étape c), la mise en oeuvre du traitement de validation comprend la détermination d'un critère de régularité représentatif de la régularité de la répartition des points de travail sur le plan principal à partir des distances des points de travail par rapport à une ligne de référence définie à partir desdits points de travail, et la comparaison de ce critère de régularité avec au moins un seuil de régularité;
- le critère de régularité est comparé avec deux seuils de régularité différents, et l'objet est validé en tant que doigt humain lorsque le critère de régularité est compris entre les deux seuils de régularité;
- à l'étape a), on détermine une pluralité de plans principaux, et soit lesdits plans principaux contiennent l'axe principal, soit un seul plan principal contient l'axe principal et les autres plans principaux sont parallèles audit plan principal contenant l'axe principal, et les étapes b) et c) sont effectuées pour chaque plan principal;
- l'étape a) comprend la détermination d'une pluralité de plans principaux comprenant ledit axe principal, chacun desdits plan principaux coupant la représentation de la surface de l'objet,
- l'étape b) comprend la détermination de plans secondaires coupant l'axe principal, lesdits plans secondaires définissant des tronçons répartis dans la direction de l'axe principal, des points de travail étant associés à chacun desdits tronçons,
- l'étape c) comprend la détermination de distances et le traitement de validation fait intervenir un critère de validation déterminé à partir de l'évolution, selon les tronçons, de distances calculées à partir des points de travail, ledit critère de validation étant comparé à un seuil de validation;
- les plans secondaires sont perpendiculaires à l'axe principal et distants les uns par rapport aux autres dans la direction de l'axe principal d'une distance fixe;
- les points de travail sont déterminés à partir de l'intersection entre la représentation de la surface de l'objet, lesdits plans principaux, et les plans secondaires;
- l'étape c) comprend le calcul de distances entre des points de travail voisins appartenant à la même intersection entre la représentation de la surface de l'objet et un plan secondaire, et le traitement de validation fait intervenir un critère de validation déterminé à partir de l'évolution de ces distances selon les tronçons;
- l'étape c) comprend le calcul de la distance à l'axe principal des points de travail, et le traitement de validation fait intervenir un critère de validation déterminé à partir de l'évolution de ces distances à l'axe principal des points de travail des différents tronçons;
- le procédé comprend en outre un test de planéité, dans lequel un plan de régression est déterminé à partir de points de travail correspondant à des points de représentation, au moins un critère de planéité est déterminé à partir des distances entre ledit plan de régression et les points de travail à partir desquels ledit plan de régression a été déterminé, et le traitement de validation comprend une comparaison entre le critère de planéité et le plan de référence.

L'invention concerne également un produit programme d'ordinateur comprenant des instructions de code de programme pour l'exécution des étapes du procédé selon l'un quelconque des modes de réalisation de l'invention lorsque ledit programme est exécuté par un ordinateur.

L'invention concerne enfin un système d'analyse biométrique d'un objet à authentifier comme doigt humain, comprenant un dispositif d'acquisition d'images adapté pour acquérir au moins une image d'un objet à authentifier comme doigt humain, et une unité de traitement pour déterminer une représentation tridimensionnelle dudit objet à partir de ladite image, ledit système comprenant également un processeur configuré pour mettre en oeuvre le procédé de détection de fraude selon un mode de réalisation de l'invention.

PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:

- les figures 1 et 2 illustrent des exemples de représentations tridimensionnelles de la surface d'un doigt et d'une photographie enroulée, respectivement;
- les figures 3 et 4 illustrent des exemples de détermination de plans principaux;
- les figures 5 et 6 illustrent des exemples de détermination de points de travail au niveau d'une zone de coupure entre un plan principal et la surface d'une représentation tridimensionnelle de la surface d'un objet;

- la figure 7 illustre un exemple de détermination de points de travail à la surface d'une représentation tridimensionnelle de la surface d'un objet.

DESCRIPTION DETAILLEE

Comme indiqué plus haut, les fraudes utilisées pour tromper une identification biométrique font généralement appel à des leurres, des faux éléments du corps humain, qui visent à en reproduire les caractéristiques. La forme la plus simple pour frauder un capteur biométrique basé sur l'analyse de la surface d'un doigt humain consiste à présenter au capteur une reproduction papier d'un doigt humain présentant certaines caractéristiques biométriques. Ainsi, dans le cas courant d'une détection des empreintes digitales, il s'agit de présenter une photographie, présentée plane ou enroulée autour d'un doigt, sur laquelle est reproduite un doigt avec ses empreintes digitales. Une forme plus évoluée consiste à disposer ,à la surface d'un doigt présenté au capteur, un leurre en silicone ou autre matériau similaire tel que gélatine ou latex, ledit leurre reproduisant des empreintes digitales.

L'invention vise à détecter les tentatives de fraude en analysant la géométrie de la surface de l'objet présenté au moyen de sa représentation tridimensionnelle. On entend par représentation tridimensionnelle d'un objet tout type de représentation en trois dimensions de la surface dudit objet. Notamment, la représentation tridimensionnelle peut être un maillage composé d'un ensemble de polygones tels que des triangles, être un nuage de points, ou encore être définie par une surface paramétrique.

On appellera points de représentation les données géométriques spatiales représentatives de cette représentation tridimensionnelle, correspondants aux éléments de la représentation tridimensionnelle utilisés pour le calcul et la représentation de celle-ci, ou qui en sont dérivés. Ainsi, les points de représentation peuvent correspondre par exemple aux points constituant une surface de la représentation tridimensionnelle, aux sommets des polygone d'un maillage, aux points constituant les lignes reliant ces polygones, aux points d'un nuage de points ou constituant les lignes reliant ceux-ci.

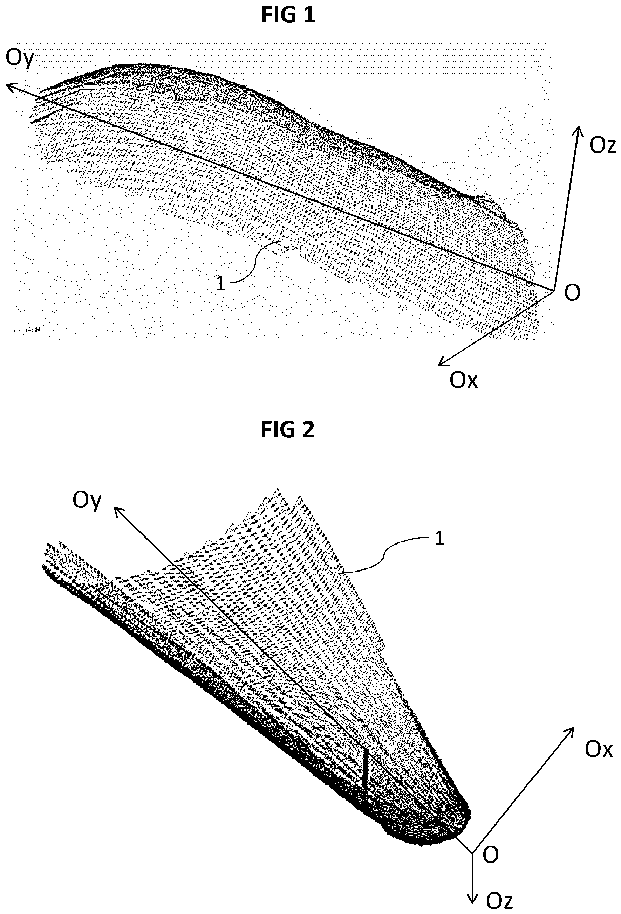

La représentation tridimensionnelle comprend ainsi un ensemble de points de représentation modélisant au moins une partie de la surface de l'objet, et l'authentification de l'objet comme doigt humain est basée sur la géométrie de la répartition des points de représentation. Les figures 1 et 2 illustrent des exemples de représentations tridimensionnelles respectivement de la surface d'un doigt humain et de la surface d'une fraude papier enroulée sous forme de cylindre. Dans ces deux cas, il s'agit de maillages composés d'un ensemble de facettes triangulaires dont les sommets sont constitués par des points de représentations dont les coordonnées spatiales sont connues.

Ainsi qu'indiqué plus haut, la représentation tridimensionnelle de l'objet peut être déterminée par une unité de traitement à partir d'une image acquise par un dispositif d'acquisition d'images adapté pour acquérir au moins une image d'un objet à authentifier comme doigt humain. Le procédé qui suit peut être mis en oeuvre par un processeur configuré pour mettre en oeuvre ledit procédé. Le processeur peut faire partie d'un ordinateur dédié à la mise en oeuvre du traitement, ou faire partie d'un système d'authentification biométrique d'un objet à authentifier comme doigt humain, comprenant ledit dispositif d'acquisition d'images et l'unité de traitement, de laquelle peut faire partie le processeur.

Puisqu'un doigt humain peut présenter de multiples formes, il est plus fiable de mettre en évidence les formes particulières que peuvent prendre les différents types de fraude par rapport aux particularités géométriques d'un doigt humain que déterminer les caractéristiques authentiques d'un doigt humain que ne présentera pas une fraude. Par exemple, si la représentation de l'objet a une surface plate, il s'agit probablement d'une fraude papier, dans laquelle une photographie plane est présentée au capteur. Cependant, dans le cadre de l'analyse d'un doigt, il est possible d'exploiter les particularités géométriques d'un doigt humain afin de renforcer la fiabilité de la détection de la fraude.

En effet, un doigt présente une forme globalement cylindrique, s'étendant selon un axe de révolution, avec une extrémité se refermant par une surface non développable de type semi-sphérique. Ainsi, dans la première étape a) du procédé, un axe principal dans la direction longitudinale de la représentation de l'objet est d'abord déterminé à partir des points de représentation. Il est par exemple possible de mettre en oeuvre une analyse en composantes principales de la répartition des points de représentation pour déterminer cet axe principal. L'axe principal est l'axe longitudinal selon lequel s'étend un doigt.

On peut changer le référentiel dans lequel sont exprimées les coordonnées des points de représentation, de sorte qu'un des axes du référentiel soit l'axe principal ainsi déterminé, ou au moins colinéaire à celui-ci, afin de simplifier les calculs. Un autre axe peut être celui de l'imageur ayant réalisé la prise de vue de laquelle est tiré la représentation tridimensionnelle. De préférence, il s'agit d'un référentiel orthogonal. A titre d'exemple, dans les figures 1 et 2, Oy correspond à l'axe principal, Ox correspond à un axe orthogonal à l'axe principal Oy et à l'axe de visée (ou axe de l'imageur), et Oz un axe orthogonal à Ox et Oy. On cherche à analyser la régularité ou la planéité de la représentation de la surface de l'objet pour vérifier qu'il ne s'agit pas d'une fraude. Pour ce faire, on utilise l'intersection d'un plan contenant l'axe principal et la représentation de la surface de l'objet, afin de déterminer des points à analyser, dits points de travail.

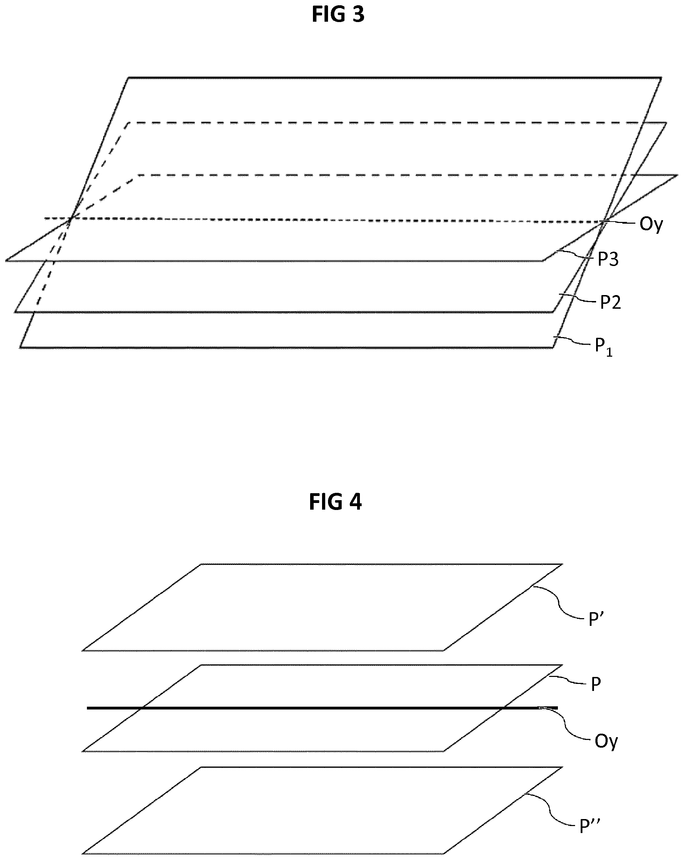

Ainsi, dans l'étape a), on détermine au moins un plan principal comprenant ledit axe principal, ledit plan principal coupant la représentation de la surface de l'objet le long d'au moins une zone de coupure. En référence aux figures 3 et 4, afin de rendre plus fiable l'analyse qui suit, on peut utiliser déterminer une pluralité de plans principaux P, chacun desdits plan principaux P coupant la représentation de la surface de l'objet. Dans l'exemple de la figure 3, les plans principaux P comprennent chacun l'axe principal Oy et sont sécants au niveau de cet axe principal Oy, et se répartissent angulairement par rotation autour de cet axe principal Oy. Dans l'exemple de la figure 4, un seul plan principal P contient l'axe principal Oy, les autres plans principaux P' et P" sont parallèles à ce plan principal P contenant l'axe principal Oy.

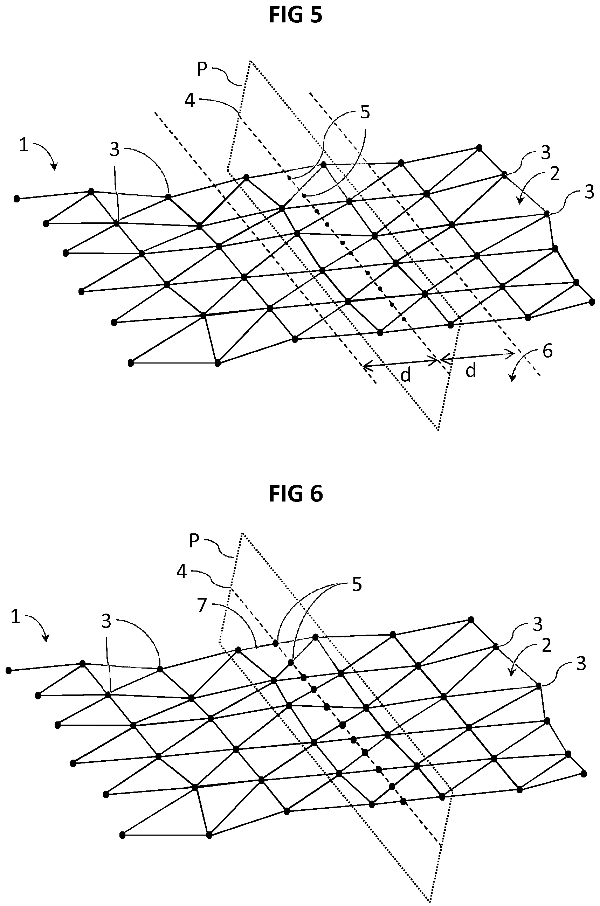

A titre d'illustration, on a représenté sur les figures 5 et 6 une vue partielle d'une zone de coupure, au niveau de laquelle le plan principal P coupe une représentation 1 de la surface d'un objet. Cette représentation est ici un maillage de facettes triangulaires 2 dont les sommets sont les points de représentation 3. Le plan P coupe la représentation 1 au niveau d'une ligne de coupure 4.

Dans une étape b), pour chaque plan principal P, on détermine un ensemble de points de travail à partir de points de représentation au niveau de la zone de coupure, c'est-à-dire à proximité de la zone de coupure. La détermination des points de travail est faite de sorte à permettre l'analyse de la géométrie de la représentation 1 de la surface de l'objet. Plusieurs solutions sont possibles. Lorsque les points de travail constituent une surface, on peut calculer l'intersection de cette surface avec le plan principal P, et sélectionner les points de représentation au niveau de cette intersection en tant que points de travail. Plus généralement toutefois, la représentation tridimensionnelle est composée de points de représentation ne formant pas une surface continue.

Comme représenté sur la figure 5, les points de travail 5 peuvent correspondre aux projections sur le plan principal P des points de représentation 2 dont la distance par rapport au plan principal est inférieure à distance donnée, au moins dans une direction. A cet effet, la zone de coupure 6 s'étend de part et d'autre du plan principal P sur une distance d, et les points de représentation 5 se trouvant dans cette zone de coupure 6 sont projetés orthogonalement sur le plan principal 5.

Une autre solution est définir les points de travail 5 comme correspondant aux intersections du plan principal P avec des droites 7 reliant deux points de représentation 3 voisins sur la représentation 1 de la surface de l'objet, ainsi qu'illustré sur la figure 6. Les droites 7 sont celles du maillage, et correspondent donc à la représentation 1 de la surface de l'objet, mais peuvent être recrées, par exemple à partir d'un nuage de points.

Une fois déterminé les points de travails 5, une ligne de référence est définie à partir de ces points de travail 5. Cette ligne de référence est représentative de la répartition spatiale des points de travail et sert à estimer la régularité de ceux-ci en étudiant leur dispersion par rapport à ladite ligne de référence. La ligne de référence peut être une droite de régression, calculée par la mise en oeuvre d'une régression linéaire ou par une analyse en composantes principales, dans la mesure où tous les points de travail appartiennent au plan P. D'autres types plus complexes de régression peuvent être utilisés, tels qu'une régression polynomiale de degré n, une régression par morceau définissant un ensemble de section, etc...

Le traitement de validation pour valider que l'objet est un doigt humain est mis en oeuvre sur la position des points de travail 5. Ici, ce traitement fait intervenir les distances des points de travail par rapport à la ligne de référence. On peut par exemple établir un critère de régularité de la représentation 1 de la surface de l'objet selon l'axe principal Oy de ces distances, notamment en considérant leur moyenne, ou leur valeur maximale.

A titre d'exemple, en notant R un critère de régularité, il peut consister en la moyenne de ces distances:

$$R = \frac{1}{M} \sum_{i=1}^{M} r_i$$

ou du carré de ces distances:

$$R = \frac{1}{M} \sum_{i=1}^{M} r_i{}^2$$

avec M le nombre de points de travail 5, et r; la distance d'un point de travail par rapport à la ligne de référence. D'autres critères de régularité équivalents peuvent être utilisés.

Le critère de régularité, par exemple celui exposé ci-dessus, est ensuite comparé à au moins un premier seuil de régularité, et si, en valeur absolue, il est en deçà de ce seuil, signe d'une trop grande régularité, cela indique que l'objet n'est pas un doigt authentique mais un leurre, probablement une photographie enroulée. Ainsi, pour que l'objet soit validé comme un doigt humain, il faut que le critère de régularité dépasse ce premier seuil de régularité. Le premier seuil de régularité peut être déterminé empiriquement sur une base de représentations de doigts authentiques et de leurres. Par ailleurs, il peut être constant ou dépendre de paramètres, tels que la distance d sur laquelle s'étend la zone de coupure 6, ou bien encore la finesse du maillage de la représentation tridimensionnelle 1.

Alternativement, ou en complément, il est possible de comparer le critère de régularité à au moins un second seuil de régularité, et si, en valeur absolue, il est au-dessus de ce seuil, signe d'une trop grande irrégularité, cela indique que l'objet n'est pas un doigt authentique mais un leurre. En effet, lorsqu'une fraude consiste à coller un matériau tel qu'une pâte à modeler, du silicone, ou du latex, portant des informations biométriques d'une autre personne, telles que des empreintes digitales, l'apport de ce matériau crée généralement une discontinuité physique se traduisant par une irrégularité de la représentation tridimensionnelle de la surface de l'objet. Ainsi, pour que l'objet soit validé comme un doigt humain, il faut que le critère de régularité soit en deçà de ce second seuil de régularité. Comme pour le premier seuil de régularité, le second seuil de régularité peut être déterminé empiriquement sur une base de représentations de doigts authentiques et de leurres. Par ailleurs, il peut être constant ou dépendre de paramètres, tels que la distance d sur laquelle s'étend la zone de coupure 6, ou bien encore la finesse du maillage de la représentation tridimensionnelle 1.

Ainsi, le critère de régularité peut être comparé avec deux seuils de régularité différents, et l'objet est validé en tant que doigt humain lorsque le critère de régularité est compris entre les deux seuils de régularité.

Dans le cas de l'utilisation de plusieurs plans principaux P, comme ceux illustrés aux figures 3 et 4, on peut déterminer un ensemble de points de travail 5 pour chaque intersection d'un plan principal P avec la représentation 1, et déterminer un critère de régularité Rp pour chacun de ces ensembles. Ces critères de régularité peuvent être individuellement comparés à un seuil de régularité, ou bien on peut construire un critère global de régularité, et comparer celui-ci à au moins un seuil global de régularité. Par exemple, le critère global de régularité $R_G$ peut être la moyenne des critères de régularité $R_p$:

$$R_G = \frac{1}{N} \sum_{p=1}^{N} R_p$$

avec N le nombre de plans principaux. Le critère global de régularité $R_G$ peut être construit à partir d'autres notions que la moyenne, comme la médiane ou encore la valeur maximale des critères de régularité. On peut également prendre des indicateurs dérivés des critères de régularité, comme par exemple le carré de ceux-ci.

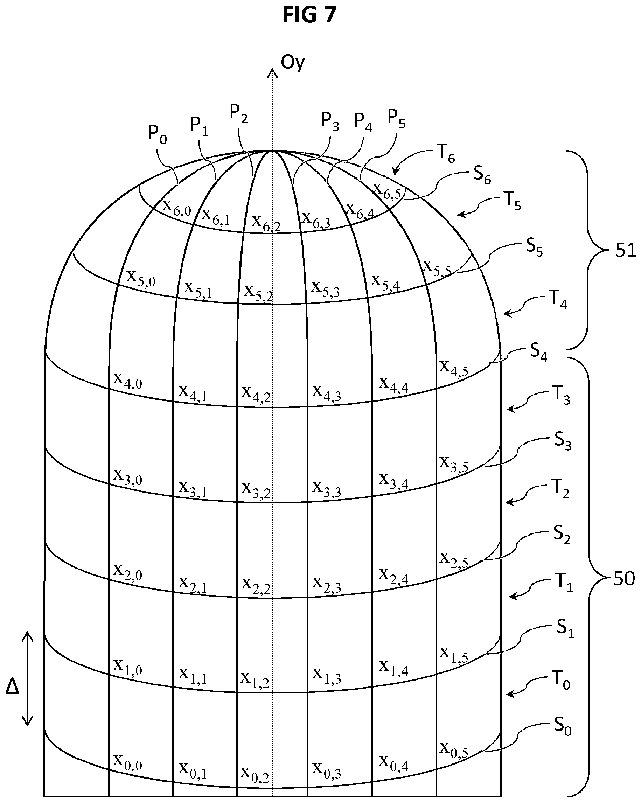

Comme précédemment énoncé, un doigt se caractérise non seulement par sa forme cylindrique, mais aussi par son extrémité qui correspond à une surface non-développable. En référence à la figure 7, la représentation tridimensionnelle d'un doigt comprend schématiquement une partie cylindrique 50, au niveau de laquelle un doigt présente une section avec peu de variations, et une extrémité 51 au niveau de laquelle le doigt présente une forme globalement semi-sphérique, dans laquelle sa section, le long de l'axe principal Oy, décroit. Par exemple, en coupant un doigt dans le sens de la largeur, i.e. perpendiculairement à l'axe principal, au niveau de la dernière phalange, on obtient une forme de cloche globalement semi-sphérique. Le traitement de validation peut exploiter cette caractéristique pour détecter les fraudes et distinguer un doigt authentique.

A cet effet, l'étape a) comprend la détermination d'une pluralité de plans principaux comprenant l'axe principal Oy, chacun desdits plan principaux $P_i$ coupant la représentation de la surface de l'objet. La figure 3 illustre un exemple de tels plans principaux $P_i$. Seules les intersections des plans principaux $P_i$ avec la représentation de la surface de l'objet sont représentées sur la figure 7.

L'étape b) comprend la détermination de plans secondaires $S_j$ coupant l'axe principal Oy, lesdits plans secondaires $S_j$ définissant des tronçons $T_j$ répartis dans la direction de l'axe principal, des points de travail étant associés à chacun desdits tronçons. L'étape c) comprend alors la détermination de distances et le traitement de validation fait intervenir un critère de validation déterminé à partir de l'évolution, selon les tronçons, de distances calculées à partir des points de travail, ledit critère de validation étant comparé à un seuil de validation.

Plus précisément, dans un mode de réalisation, l'étape b) comprend la détermination de plans secondaires $S_j$ perpendiculaires à l'axe principal Oy et distants les uns par rapport aux autres dans la direction de l'axe principal Oy d'une distance fixe Δ. Seules les intersections des plans secondaires $S_j$ avec la représentation de la surface de l'objet sont représentées sur la figure 7. Les plans secondaires $S_j$ définissent des tronçons $T_j$ de la surface de représentation, répartis dans la direction de l'axe principal Oy, le tronçon $T_j$ étant défini entre les plans secondaires $S_j$ et $S_{j+1}$. Les points de travail $x_{j,i}$ sont déterminés à partir des intersections entre la représentation de la surface de l'objet, lesdits plans principaux $P_i$, et les plans secondaires $S_j$. Par exemple, le point de travail $x_{2,4}$ correspond à l'intersection entre la représentation de la surface de l'objet, le plan principal $P_4$ et le plan secondaire $S_2$.

Le traitement de validation à l'étape c) vise ensuite à mettre en évidence le rapprochement de ces points de travail au niveau de l'extrémité 51 d'un doigt, entre eux ou par rapport à l'axe principal Oy, ce que ne présentera pas un leurre tel qu'un papier enroulé.

Pour mettre en évidence le rapprochement entre eux de ces points de travail au niveau de l'extrémité 51 d'un doigt, l'étape c) comprend le calcul de distances entre des points de travail $x_{j,i}$ voisins appartenant à la même intersection entre la représentation de la surface de l'objet et un plan secondaire $S_j$. Ainsi, le traitement de validation prend en compte la distance entre le point de travail $x_{j,i}$ et le point de travail $x_{j,i+1}$, notée $d(x_{j,i}, x_{j,i+1})$. Plus précisément, le traitement de validation fait intervenir un critère de validation déterminé à partir de l'évolution de ces distances selon les tronçons $T_j$, ledit critère de validation étant comparé à un seuil de validation. Par exemple, le critère de validation peut prendre en compte la différence entre deux de ces distances voisines dans la direction de l'axe principal Oy:

$$d\big(x_{j+1,i}, x_{j+1,i+1}\big) - d\big(x_{j,i}, x_{j,i+1}\big)$$

Cette différence indique la variation de la distance entre deux points de travail aux deux extrémités d'un tronçon $T_j$. De préférence, c'est la moyenne, ou un indicateur équivalent, de l'ensemble de ces différences pour un tronçon $T_j$ qui est prise en compte, pour donner un critère de validation $D_j$ indiquant la variation de distance inter-points sur le tronçon $T_j$ entre les plans secondaires $S_j$ et $S_{j+1}$ :

$$D_j = \frac{1}{N-1} \sum_{i=0}^{N-1} \big[ d\big(x_{j+1,i}, x_{j+1,i+1}\big) - d\big(x_{j,i}, x_{j,i+1}\big) \big]$$

avec N le nombre de plans principaux $P_i$.

De manière analogue, on peut déterminer un cercle approchant au mieux les points de travail dans chaque tronçon $T_j$, et le critère de validation $D_j$ peut être construit à partir de l'étude de la variation des rayons de ces cercles.

Le critère de validation peut être comparé directement à un seuil de validation représentatif de la variation attendue d'un doigt humain afin de pouvoir valider ou non l'authenticité de l'objet. En comparant des distances inter-points de part et d'autre d'un tronçon $T_j$ dans la direction de l'axe principal Oy, on devrait, pour un doigt humain, constater une diminution de ces distances, dans le sens allant de la partie cylindrique 50 à l'extrémité 51. Par exemple, le critère $D_j$ présenté plus haut est normalement négatif pour un doigt humain authentique. Ainsi, si le critère $D_j$ est au-dessus d'un seuil de validation, par exemple pris à zéro, ou proche de zéro afin d'autoriser une certaine tolérance, il s'agit du signe d'une non-décroissance de la section de l'objet dans la direction de l'axe principal Oy, et cela indique que l'objet n'est pas un doigt authentique mais une fraude, probablement une photographie enroulée. Ainsi, pour que l'objet soit validé comme un doigt humain, il faut que le critère de régularité soit en-dessous du seuil de validation, qui peut être précisé empiriquement sur une base de représentations de doigts authentiques et de leurres.

Alternativement, ou en complément, pour mettre en évidence le rapprochement de ces points de travail $x_{j,i}$ par rapport à l'axe principal au niveau de l'extrémité 51 d'un doigt, l'étape c) comprend le calcul de la distance à l'axe principal Oy des points de travail $x_{j,i}$, et le traitement de validation fait intervenir un critère de validation déterminé à partir de l'évolution de ces distances à l'axe principal Oy des points de travail $x_{j,i}$ des différents tronçons $T_j$, ledit critère de validation étant comparé à un seuil de validation.

Plus précisément, on calcule un indicateur de la distance à l'axe principal Oy des points de travail $x_{j,i}$ appartenant à la même intersection entre la représentation de la surface de l'objet et un plan secondaire $S_j$, par exemple la moyenne ou un autre critère de position permettant de distinguer une différence progressive tel que la variance ou l'écart-type, et on compare les indicateurs des points situés de part et d'autre d'un tronçon $T_j$. On obtient ainsi un critère de validation du type:

$$D_j = \frac{1}{N} \sum_{i=0}^{N-1} d\big(x_{j,i}, Oy\big) - \frac{1}{N} \sum_{i=0}^{N-1} d\big(x_{j+1,i}, Oy\big)$$

avec N le nombre de plans principaux $P_i$, Oy l'axe principal, et $d(x_{j,i}, Oy)$ la distance entre le point de travail $x_{j,i}$ et l'axe principal Oy.

Comme précédemment, le critère de validation peut être comparé directement à un seuil de validation représentatif de la variation attendue d'un doigt humain afin de pouvoir valider ou non l'authenticité de l'objet. En comparant des distances entre les points de travail $x_{j,i}$ et l'axe principal Oy de part et d'autre d'un tronçon $T_j$ dans la direction de l'axe principal Oy, on devrait, pour un doigt humain, constater une diminution de ces distances. Par exemple, le critère de validation $D_j$ construit à partir des distances à l'axe principal Oy présenté plus haut est normalement négatif pour un doigt humain authentique.

Ainsi, si le critère D$_j$ est au-dessus d'un seuil de validation, par exemple pris à zéro, ou proche de zéro afin d'autoriser une certaine tolérance, il s'agit du signe d'une non-décroissance de la section de l'objet dans la direction de l'axe principal Oy, et cela indique que l'objet n'est pas un doigt authentique mais une fraude, probablement une photographie enroulée, ou bien un autre type de fraude présentant une difficulté à recouvrir la phalange supérieure du doigt de façon homogène. Ainsi, pour que l'objet soit validé comme un doigt humain, il faut que le critère de régularité soit en-dessous du seuil de validation, qui peut être déterminé empiriquement sur une base de représentations de doigts authentiques et de fraudes.

Par ailleurs, le procédé de détection de fraude peut également exploiter la planéité de la représentation de la surface de l'objet. Il s'agit alors de comparer la représentation de la surface de l'objet, ou une partie de celle-ci, à un plan de référence minimisant la distance entre des points de travail, correspondant à des points de représentation, et ledit plan de régression.

On peut sélectionner l'ensemble des points de représentation en tant que points de travail, ou bien diviser la représentation de la surface en sous-ensembles, par exemple d'une superficie de 1 à 10 mm$^2$, et sélectionner les points de représentation d'un sous-ensemble en tant que points de travail.

Le plan de référence peut par exemple être un plan de régression déterminé par une analyse en composantes principales, par une méthode des moindres carrés sur les points de travail, ou bien encore par une régression polynomiale. On détermine ensuite au moins un critère de planéité représentatif de la planéité de la répartition des points de travail et calculé sur la base des distances entre les points de travail et le plan de référence, qu'on compare à au moins un seuil de planéité.

Dans le cas où les points de travail correspondent à des points de représentation représentant une part importante de la représentation de la surface de l'objet, par exemple la totalité ou au moins la majorité de ceux-ci, le fait que les points de travail soient proches du plan de référence indique une forte planéité globale de la représentation de la surface de l'objet. L'objet est alors probablement une photographie plane, puisqu'un doigt a une forme globalement cylindrique.

A l'inverse, dans le cas où les points de travail correspondent à des points de représentation représentant une petite portion de la représentation de la surface de l'objet, par exemple un des sous-ensembles mentionnés plus haut, le fait que les points de travail soient éloignés du plan de référence indique une faible planéité locale de la représentation de la surface de l'objet. Or, la surface d'un doigt authentique, sur une faible superficie inférieure à 10 mm$^2$, est suffisamment régulière pour pouvoir être estimée localement par un plan. Par conséquent, la faible planéité locale correspond à une irrégularité indiquant la présence d'un matériau rapporté, tel qu'un leurre en silicone ou autre matériau similaire tel que gélatine ou latex.

Par conséquent, on peut déterminer un critère de planéité globale et un critère de planéité locale. La détermination du critère de planéité globale fait intervenir des points de travail correspondant à des points de représentation représentant une part importante de la représentation de la surface de l'objet, par exemple la totalité ou au moins la majorité de ceux-ci. Le critère de planéité globale est construit à partir d'un indicateur des distances entre les points de travail et le plan de référence, de préférence la moyenne des distances, ou bien la médiante, la valeur maximale, etc.... Par exemple avec la moyenne, le critère de planéité globale D$_g$ prend la forme suivante:

$$D_g = \frac{1}{N} \sum_{i=1}^{N} d(x_i, R)$$

avec N le nombre de points de travail, et d(x$_i$, R) la distance entre le point de travail x; et le plan de référence R.

Ce critère de planéité globale D$_g$ est ensuite comparé à un seuil de planéité globale. Celui-ci peut correspondre à une valeur représentative d'une forte planéité, et donc prendre une valeur faible, par exemple inférieure à trois fois une marge d'erreur estimée. Il peut également être déterminé empiriquement sur une base de représentations de doigts authentiques et de fraudes planes. Le fait que le critère de planéité globale D$_g$ soit inférieur au seuil de planéité globale indique que la surface de la représentation de l'objet est trop plate pour être un doigt humain authentique. A l'inverse, le fait que le critère de planéité globale D$_g$ soit supérieur au seuil de planéité globale indique que la surface de la représentation de l'objet est suffisamment courbe pour correspondre à un doigt humain authentique, et ne correspond donc pas à une fraude plane.

La détermination du critère de planéité locale fait intervenir des points de travail correspondant à représentant une petite portion de la représentation de la surface de l'objet, par exemple un des sous-ensembles mentionnés plus haut. Le critère de planéité locale est construit à partir d'un indicateur des distances entre les points de travail et le plan de référence, de préférence la moyenne des distances, ou bien la médiante, la valeur maximale, etc.... Par exemple avec la moyenne, le critère de planéité locale D$_l$ prend la forme suivante:

$$D_l = \frac{1}{N} \sum_{i=1}^{N} d(x_i, R)$$

avec N le nombre de points de travail, et d($x_i$, R) la distance entre le point de travail $x_i$ et le plan de référence R.

Ce critère de planéité locale $D_l$ est ensuite comparé à un seuil de planéité locale. Celui-ci peut correspondre à une valeur représentative d'une forte planéité locale, et donc prendre une valeur faible, dépendant notamment de la superficie retenue pour le sous-ensemble traité. Il peut également être déterminé empiriquement sur une base de représentations de doigts authentiques et de fraudes planes. Le fait que le critère de planéité locale $D_g$ soit supérieur au seuil de planéité locale indique la présence d'une irrégularité susceptible de correspondre à la présence d'une fraude. A l'inverse, le fait que le critère de planéité locale $D_g$ soit inférieur au seuil de planéité locale indique que la surface de la représentation de l'objet est suffisamment plane pour correspondre à la régularité locale d'un doigt humain authentique.

Dans la mesure où la planéité locale n'est estimée que pour un sous-ensemble de la surface de la représentation de l'objet, ce test de planéité locale est de préférence mis en oeuvre pour une pluralité de sous-ensembles, de préférence la totalité de la surface étant traitée par sous-ensembles.

L'invention concerne également un produit programme d'ordinateur comprenant des instructions de code de programme pour l'exécution des étapes du procédé selon l'un quelconque des modes de réalisation précédemment décrit lorsque ledit programme est exécuté par un ordinateur.

## Revendications

1. Procédé de détection de fraude pour authentifier qu'un objet est un doigt humain à partir d'une représentation tridimensionnelle dudit objet préalablement déterminée par une unité de traitement à partir d'une image dudit objet acquise par un dispositif d'acquisition d'image, ladite représentation tridimensionnelle comprenant un ensemble de points de représentation (3) modélisant au moins une partie de la surface de l'objet, dans lequel un processeur met en oeuvre les étapes suivantes:

    a) détermination d'au moins un plan principal (P) comprenant un axe principal (Oy) dans la direction longitudinale de la représentation tridimensionnelle de l'objet, ledit plan principal (P) coupant la représentation (1) de la surface de l'objet le long d'au moins une zone de coupure,
    b) pour chaque plan principal (P), détermination d'un ensemble de points de travail (5, $x_{j,i}$) à partir de points de représentation (3) au niveau de la zone de coupure,
    c) validation de ce que l'objet est un doigt humain par mise en oeuvre d'un traitement de validation sur la position des points de travail.

2. Procédé selon la revendication précédente, dans lequel à l'étape a), l'axe principal (Oy) de la représentation tridimensionnelle est déterminé par analyse en composantes principales de la répartition des points de représentation.

3. Procédé selon l'une des revendications précédentes dans lequel à l'étape b), les points de travail (5) correspondent aux projections sur le plan principal (P) des points de représentation (3) dont la distance par rapport au plan principal est inférieure à une distance donnée ou les points de travail (5) correspondent aux intersections du plan principal (P) avec des droites (7) reliant deux points de représentation (3) voisins sur la représentation de la surface.

4. Procédé selon l'une des revendications précédentes, dans lequel à l'étape c), la mise en oeuvre du traitement de validation comprend la détermination d'un critère de régularité représentatif de la régularité de la répartition des points de travail sur le plan principal à partir des distances des points de travail par rapport à une ligne de référence définie à partir desdits points de travail, et la comparaison de ce critère de régularité avec au moins un seuil de régularité.

5. Procédé selon la revendication précédente, dans lequel le critère de régularité est comparé avec deux seuils de régularité différents, et l'objet est validé en tant que doigt humain lorsque le critère de régularité est compris entre les deux seuils de régularité.

6. Procédé selon l'une des revendications précédentes, dans lequel à l'étape a), on détermine une pluralité de plans principaux, et soit lesdits plans principaux contiennent l'axe principal, soit un seul plan principal contient l'axe principal et les autres plans principaux sont parallèles audit plan principal contenant l'axe principal, et les étapes b) et c) sont effectuées pour chaque plan principal.

7. Procédé selon l'une des revendications 1 à 2, dans lequel

   - l'étape a) comprend la détermination d'une pluralité de plans principaux ($P_i$) comprenant ledit axe principal (Oy), chacun desdits plan principaux ($P_i$) coupant la représentation de la surface de l'objet,
   - l'étape b) comprend la détermination de plans secondaires ($S_j$) coupant l'axe principal (Oy), lesdits plans secondaires ($S_j$) définissant des tronçons ($T_j$) répartis dans la direction de l'axe principal, des points de travail étant associés à chacun desdits tronçons,
   - l'étape c) comprend la détermination de distances et le traitement de validation fait intervenir un critère de validation déterminé à partir de l'évolution, selon les tronçons, de distances calculées à partir des points de travail, ledit critère de validation étant comparé à un seuil de validation.

8. Procédé selon la revendication 7, dans lequel les plans secondaires ($S_j$) sont perpendiculaires à l'axe principal (Oy) et distants les uns par rapport aux autres dans la direction de l'axe principal d'une distance fixe ($\Delta$).

9. Procédé selon l'une des revendications 7 ou 8, dans lequel les points de travail ($x_{j,i}$) sont déterminés à partir de l'intersection entre la représentation de la surface de l'objet, lesdits plans principaux, et les plans secondaires.

10. Procédé selon l'une des revendications 7 à 9, dans lequel l'étape c) comprend le calcul de distances entre des points de travail ($x_{j,i}$) voisins appartenant à la même intersection entre la représentation de la surface de l'objet et un plan secondaire ($S_j$), et le traitement de validation fait intervenir un critère de validation déterminé à partir de l'évolution de ces distances selon les tronçons ($T_j$).

11. Procédé selon l'une des revendications 7 à 9, dans lequel l'étape c) comprend le calcul de la distance à l'axe principal (Oy) des points de travail ($x_{j,i}$), et le traitement de validation fait intervenir un critère de validation déterminé à partir de l'évolution de ces distances à l'axe principal des points de travail des différents tronçons.

12. Procédé selon l'une des revendications précédentes, comprenant en outre un test de planéité, dans lequel un plan de régression est déterminé à partir de points de travail correspondant à des points de représentation, au moins un critère de planéité est déterminé à partir des distances entre ledit plan de régression et les points de travail à partir desquels ledit plan de régression a été déterminé, et le traitement de validation comprend une comparaison entre le critère de planéité et le plan de référence.

13. Produit programme d'ordinateur comprenant des instructions de code de programme pour l'exécution des étapes du procédé selon l'une des revendications précédentes lorsque ledit programme est exécuté par un ordinateur.

14. Système biométrique d'analyse d'un objet à authentifier comme doigt humain, comprenant un dispositif d'acquisition d'images adapté pour acquérir au moins une image d'un objet à authentifier comme doigt humain, et une unité de traitement pour déterminer une représentation tridimensionnelle dudit objet à partir de ladite image, ledit système comprenant également un processeur configuré pour mettre en oeuvre le procédé de détection de fraude selon l'une des revendications 1 à 12.

**Patentansprüche**

1. Verfahren zur Entdeckung von Betrug zwecks Authentifizierung, dass ein Objekt ein menschlicher Finger ist, auf der Basis einer dreidimensionalen Darstellung des zuvor von einer Verarbeitungseinheit auf der Basis eines Bildes von einer Bilderfassungsvorrichtung erfassten Objekts bestimmten Objekts, wobei die dreidimensionale Darstellung eine Einheit von Darstellungspunkten (3) umfasst, die mindestens einen Teil der Oberfläche des Objekts modellieren, wobei ein Prozessor die folgenden Schritte umsetzt:

   a) Bestimmen mindestens einer Hauptebene (P), umfassend eine Hauptachse (Oy) in der Längsrichtung der dreidimensionalen Darstellung des Objekts, wobei die Hauptebene (P) die Darstellung (1) der Oberfläche des Objekts entlang mindestens einer Schnittzone schneidet,
   b) für jede Hauptebene (P), Bestimmen einer Einheit von Arbeitspunkten (5, $x_{j,i}$) auf der Basis von Darstellungspunkten (3) im Bereich der Schnittzone,
   c) Validieren, dass das Objekt ein menschlicher Finger ist, durch Durchführen einer Validierungsverarbeitung auf der Position der Arbeitspunkte.

2. Verfahren nach vorangehendem Anspruch, wobei in Schritt a) die Hauptachse (Oy) der dreidimensionalen Darstellung durch Analyse in Hauptkomponenten der Verteilung der Darstellungspunkte bestimmt wird.

3. Verfahren nach einem der vorangehenden Ansprüche, wobei in Schritt b) die Arbeitspunkte (5) den Projektionen auf die Hauptebene (P) der Darstellungspunkte (3) entsprechen, deren Abstand in Bezug auf die Hauptebene kleiner als ein bestimmter Abstand ist, wo die Arbeitspunkte (5) den Schnittpunkten der Hauptebene (P) mit Geraden (7) entsprechen, die zwei benachbarte Darstellungspunkte (3) auf der Darstellung der Oberfläche verbinden.

4. Verfahren nach einem der vorangehenden Ansprüche, wobei in Schritt c) die Durchführung der Validierungsverarbeitung das Bestimmen auf der Basis der Abstände der Arbeitspunkten in Bezug auf eine auf der Basis der Arbeitspunkte definierten Referenzlinie eines Regelmäßigkeitskriteriums umfasst, das für die Regelmäßigkeit der Verteilung der Arbeitspunkte auf der Hauptebene repräsentativ ist, und das Vergleichen dieses Regelmäßigkeitskriteriums mit mindestens einem Regelmäßigkeitsgrenzwert.

5. Verfahren nach vorangehendem Anspruch, wobei das Regelmäßigkeitskriterium mit zwei verschiedenen Regelmäßigkeitsgrenzwerten verglichen wird, und das Objekt als menschlicher Finger validiert wird, wenn das Regelmäßigkeitskriterium zwischen den zwei Regelmäßigkeitsgrenzwerten inbegriffen ist.

6. Verfahren nach einem der vorangehenden Ansprüche, wobei in Schritt a) eine Vielzahl von Hauptebenen bestimmt wird, und entweder die Hauptebenen die Hauptachse enthalten oder eine einzige Hauptebene die Hauptachse enthält und die anderen Hauptebenen parallel zu der Hauptebene sind, welche die Hauptachse enthält, und die Schritte b) und c) für jede Hauptebene durchgeführt werden.

7. Verfahren nach einem der Ansprüche 1 bis 2, wobei

   - der Schritt a) das Bestimmen einer Vielzahl von Hauptebenen ($P_i$) umfasst, umfassend die Hauptachse (Oy), wobei jede der Hauptebenen ($P_i$) die Darstellung der Oberfläche des Objekts schneidet,
   - der Schritt b) das Bestimmen von sekundären Ebenen ($S_j$) umfasst, die die Hauptachse (Oy) schneiden, wobei die sekundären Ebenen ($S_j$) Abschnitte ($T_j$) definieren, die in der Richtung der Hauptachse verteilt sind, wobei Arbeitspunkte jedem der Abschnitte zugeordnet sind,
   - der Schritt c) das Bestimmen von Abständen umfasst und die Validierungsverarbeitung ein Validierungskriterium beteiligt, das auf der Basis der Entwicklung, gemäß den Abschnitten, von auf der Basis der Arbeitspunkte berechneten Abständen bestimmt ist, wobei das Validierungskriterium mit einem Validierungsgrenzwert verglichen wird.

8. Verfahren nach Anspruch 7, wobei die sekundären Ebenen ($S_j$) senkrecht zur Hauptachse (Oy) und in einem festen Abstand ($\Delta$) in Richtung der Hauptachse voneinander beabstandet sind.

9. Verfahren nach einem der Ansprüche 7 oder 8, wobei die Arbeitspunkte ($x_{j,i}$) auf der Basis des Schnittpunkts zwischen der Darstellung der Oberfläche des Objekts, den Hauptebenen und den sekundären Ebenen bestimmt werden.

10. Verfahren nach einem der Ansprüche 7 bis 9, wobei der Schritt c) die Berechnung von Abständen zwischen benachbarten Arbeitspunkten ($x_{j,i}$) umfasst, die zum gleichen Schnittpunkt zwischen der Darstellung der Oberfläche des Objekts und einer sekundären Ebene ($S_j$) gehören, und die Validierungsverarbeitung ein auf der Basis der Entwicklung dieser Abstände gemäß den Abschnitten ($T_j$) bestimmtes Validierungskriterium beteiligt.

11. Verfahren nach einem der Ansprüche 7 bis 9, wobei der Schritt c) die Berechnung des Abstands der Arbeitspunkte ($x_{j,i}$) zur Hauptachse (Oy) umfasst und die Validierungsverarbeitung ein auf der Basis der Entwicklung dieser Abstände zur Hauptachse der Arbeitspunkte der verschiedenen Abschnitte bestimmtes Validierungskriterium beteiligt.

12. Verfahren nach einem der vorangehenden Ansprüche, umfassend ferner einen Ebenheitstest, wobei eine Regressionsebene auf der Basis von Arbeitspunkten bestimmt wird, die Darstellungspunkten entsprechen, mindestens ein Ebenheitskriterium auf der Basis der Abstände zwischen der Regressionsebene und den Arbeitspunkten, auf deren Basis die Regressionsebene bestimmt wurde, bestimmt wird, und die Validierungsverarbeitung einen Vergleich zwischen dem Ebenheitskriterium und der Referenzebene umfasst.

**13.** Rechnerprogrammprodukt, umfassend Programmcodebefehle für die Ausführung der Schritte des Verfahrens nach einem der vorangehenden Ansprüche, wenn das Programm von einem Rechner ausgeführt wird.

**14.** Biometrisches Analysesystem eines als menschlicher Finger zu authentifizierenden Objekts, umfassend eine Bilderfassungsvorrichtung, die ausgebildet ist, um mindestens ein Bild eines als menschlicher Finger zu authentifizierenden Objekts zu erfassen, und eine Verarbeitungseinheit, um eine dreidimensionale Darstellung des Objekts auf der Basis des Bildes zu bestimmen, wobei das System ebenfalls einen Prozessor umfasst, der konfiguriert ist, um das Verfahren zur Entdeckung von Betrug nach einem der Ansprüche 1 bis 12 durchzuführen.

**Claims**

**1.** A method for detecting fraud to authenticate that an object is a human finger from a three-dimensional representation of said object previously determined by a processing unit from an image of said object acquired by an image acquisition device, said three-dimensional representation comprising a set of representation points (3) modeling at least a part of the surface of the object, wherein a processor implements the following steps:

a) determining at least one principal plane (P) comprising a principal axis (Oy) in the longitudinal direction of the three-dimensional representation of the object, said principal plane (P) intersecting the representation (1) of the surface of the object along at least one intersection zone,
b) for each principal plane (P), determining a set of working points (5, $x_{j,i}$) from representation points (3) at the intersection zone,
c) validation that the object is a human finger by implementing a validation process on the position of the working points.

**2.** Method according to the preceding claim, wherein in step a), the principal axis (Oy) of the three-dimensional representation is determined by principal component analysis of the distribution of the representation points.

**3.** The method according to one of preceding claims, wherein, in step b), the working points (5) correspond to the projections on the principal plane (P) of the representation points (3) that have a distance from principal plane less than a given distance or the working points (5) correspond to the intersections of the principal plane (P) with straight lines (7) connecting two neighboring representation points (3) on the representation of the surface.

**4.** Method according to one of preceding claims, wherein, in step c), the implementation of the validation process comprises the determination of a regularity criterion representative of the regularity of the distribution of the working points on the principal plane from the distances of the working points with respect to a reference line defined from said working points, and comparing this regularity criterion with at least one regularity threshold.

**5.** The method according to the preceding claim, wherein the regularity criterion is compared with two different regularity thresholds, and the object is validated as a human finger when the regularity criterion is comprised between the two regularity thresholds.

**6.** A method according to one of preceding claims, wherein in step a) a plurality of principal planes are determined and either said principal planes contain the principal axis or a single principal plane contains the principal axis and the other principal planes are parallel to said principal plane containing the principal axis, and steps b) and c) are performed for each principal plane.

**7.** The method according to one of claims 1 to 2, wherein

- Step a) comprises determining a plurality of principal planes ($P_i$) including said principal axis (Oy), each of said principal planes ($P_i$) intersecting the representation of the surface of the object,
- Step b) comprises the determination of secondary planes ($S_j$) intersecting the principal axis (Oy), said secondary planes ($S_j$) defining sections ($T_j$) distributed in the direction of the principal axis, working points being associated with each one of said sections,
- Step c) comprises the determination of distances and the validation process involves a validation criterion determined on the basis of the evolution, according to the sections, of distances calculated from the working points, said validation criterion being compared to a validation threshold.

8. The method according to claim 7, wherein the secondary planes ($S_j$) are perpendicular to the principal axis (Oy) and are spaced from each other in the direction of the principal axis by a fixed distance ($\Delta$).

9. Method according to one of claims 7 or 8, wherein the working points ($x_{j,i}$) are determined from the intersection between the representation of the surface of the object, said principal planes, and said secondary planes.

10. Method according to one of claims 7 to 9, wherein step c) comprises calculating distances between neighboring working points ($x_{j,i}$) belonging to the same intersection between the representation of the surface of the object and a secondary plane ($S_j$), and the validation process involves a validation criterion determined from the evolution of these distances according to the sections ($T_j$).

11. Method according to one of claims 7 to 9, wherein step c) comprises calculating the distance to the principal axis (Oy) of the working points ($x_{j,i}$), and the validation process involves a validation criterion determined from the evolution of these distances to the principal axis of working points of the different sections.

12. The method according to one of preceding claims, further comprising a flatness test, wherein a regression plane is determined from working points corresponding to representation points, at least one flatness criterion is determined from the distances between said regression plane and the working points from which said regression plane has been determined, and the validation process comprises a comparison between the flatness criterion and the reference plane.

13. A computer program product comprising program code instructions for performing the steps of the method according to one of the preceding claims when said program is executed by a computer.

14. A biometric system for analyzing an object to be authenticated as a human finger, comprising an image acquisition device adapted to acquire at least one image of an object to be authenticated as a human finger, and a processing unit for determining a three-dimensional representation of said object from said image, said system also comprising a processor configured to implement the fraud detection method according to one of claims 1 to 12.

## FIG 1

## FIG 2

**FIG 3**

Oy
P3
P2
P1

**FIG 4**

P'
P
Oy
P''

**FIG 5**

**FIG 6**

## FIG 7

## RÉFÉRENCES CITÉES DANS LA DESCRIPTION

**Documents brevets cités dans la description**

- WO 2009112717 A
- US 20140049373 A